# EUROPÄISCHE PATENTANMELDUNG

(11) **EP 1 090 809 A1**
(43) Veröffentlichungstag der Anmeldung: **11.04.2001**
(21) Anmeldenummer: 00121952.6
(22) Anmeldetag: 09.10.2000
(51) Int. Cl.: B60R 1/10

(54) **Optisches Frontsichtsystem**

(30) Priorität: 08.10.1999 GB 9923780; 05.06.2000 DE 10028126
(71) Anmelder: Ford Global Technologies, Inc., A subsidiary of Ford Motor Company, Dearborn, Michigan 48126 (US)
(72) Erfinder: Koepcke, Ulrich, 50767 Koeln (DE); Betz, Christian, 51469 Bergisch-Gladbach (DE)
(74) Vertreter: Drömer, Hans-Carsten, Dipl.-Ing.

(57) **Zusammenfassung**

Die Erfindung bezieht sich auf ein optisches Frontsichtsystem, insbesondere für Kraftfahrzeuge, mit dem der Beobachter ein anderes Blickfeld ohne wesentliche Änderung seines Augenpunktes (1) erhält, indem im vorderen Blickfeld des Fahrers eine optische Einrichtung (4) angeordnet ist, die ein Bild des davorliegenden Frontbereiches des Fahrzeuges zeigt. Um verschiedene Blickwinkel und Blickfelder einstellen zu können, ist die optische Einrichtung beweglich angeordnet. Damit lassen sich sowohl Fahrbahnbereiche (7) vor dem Fahrzeug während des Einparkens als auch der Luftraum (8) über dem Fahrzeug zur Ampelbeobachtung einsehen. Verschiedene Ausführungsformen beschreiben die Anordnung des Frontsichtsystems über dem inneren Rückspiegel (6), in der Sonnenblende und auf einer separaten Positioniereinheit.

## Beschreibung

Die Erfindung bezieht sich auf ein optisches Frontsichtsystem, insbesondere für Kraftfahrzeuge, mit dem der Beobachter ein anderes Blickfeld ohne wesentliche Änderung seines Augenpunktes erhält.

In vielen Fällen hat der Fahrer eines Fahrzeuges nur ein eingeschränktes Sichtfeld nach vorne. Insbesondere beim Einparken, aber auch beim Halten vor einer Ampel oder beim Rangieren in engen Straßen ist der davorliegende Verkehrsraum für den Fahrer nicht vollständig übersehbar. Verstärkt wird dies durch die heute üblichen sehr flach angebrachten Windschutzscheiben, die aufgrund aerodynamisch günstiger Karosserien erforderlich sind, wodurch vor allem für kleinere Fahrer der Frontbereich des Fahrzeuges kaum noch zu übersehen ist. Aber auch für Fahrer von Baumaschinen, Flurförderfahrzeugen und anderen selbstfahrenden Maschinen ist es in vielen Fällen wünschenswert oder sogar erforderlich, dass der Fahrer über ein erweitertes Blickfeld nach vorne verfügt, um eine zusätzliche Sichtinformation zum Standardblickfeld zu erhalten.

Bekannt sind optischen Sichthilfen zur Unterstützung der Rückwärtsfahrt. Aus der US 4274714 und der US 4439021 sind Rückblicksysteme bekannt, bei denen Fresnellinsen an der rückwärtigen Fahrzeugscheibe angeordnet sind, wodurch Einsicht auf die direkt hinter dem Fahrzeug liegende Fahrbahn ermöglicht wird. Diese Systeme sind so jedoch nicht geeignet, als Frontsichtsystem eingebaut zu werden, da sie die speziellen Anforderungen bezüglich Bedienung und Blickfeld nicht erfüllen. Eine im Frontbereich angeordnete Sichthilfe beschreibt die DE 3833625: Eine teleskopartig ausziehbare Sonnenblende weist eine integrierte Fresnellinse auf. Allerdings dient die Fresnellinse nur als Lesehilfe für Landkarten und andere Schriften. Die Anordnung ist jedoch nicht geeignet, das Blickfeld des Fahrers nach vorne zu erweitern.

Aufgabe der vorliegenden Erfindung ist es demnach, ein optisches Frontsichtsystem zu schaffen, das einen einfachen Aufbau hat, das das Standardblickfeld des Fahrers nicht einschränkt und das durch eine einfache Bedienung an verschiedene Fahrerpositionen, an verschiedene Blickwinkel und an unterschiedliche Beleuchtungsverhältnisse angepaßt werden kann.

Diese Aufgabe wird erfindungsgemäß dadurch gelöst, dass im vorderen Blickfeld des Fahrers eine optische Einrichtung angeordnet ist, die ein Bild des davorliegenden Frontbereich des Fahrzeuges zeigt. Besonders geeignet hierfür sind flache Fresnellinsen, die als Scheibe ausgeführt sind und die den Blickwinkel entsprechend ihrer Auslegung ablenken. Es sind aber auch andere optische Linsen geeignet, die, zum Teil unter Zuhilfenahme von Zusatzspiegeln und anderer optischer Bauteile, ein abgewinkeltes Blickfeld erzeugen.

Bevorzugt ist die optische Einrichtung beweglich gelagert, um in die gewünschte Blickrichtung des Fahrers ausgerichtet werden zu können. Damit kann das Blickfeld sowohl auf den vor dem Fahrzeug liegenden Fahrbahnbereich als auch auf den neben oder über dem Fahrzeug befindlichen Luftraum, z. B. zur Ampelbeobachtung, angepaßt werden.

Eine vorteilhafte Ausgestaltung der Erfindung sieht vor, dass die optische Einrichtung über dem inneren Rückspiegel angeordnet ist. Durch die maximal erhöhte und gegenüber dem Fahrer nach vorne gezogenen Lage ergibt sich das größtmögliche Blickfeld durch die Windschutzscheibe auf den Frontbereich des Fahrzeuges. Gleichzeitig wird das Blickfeld des Fahrers nicht eingeschränkt, da der Bereich der Windschutzscheibe über dem inneren Rückspiegel nicht Teil des Standardblickfeldes ist.

Eine weitere vorteilhafte Ausgestaltung der Erfindung sieht vor, dass die optische Einrichtung auf einer Positioniereinheit angeordnet ist. Damit ist das optische Frontsichtsystem bei Bedarf an einer beliebigen Stelle im Blickfeld des Fahrers positionierbar, wenn der Fahrer zusätzlich zu seinem augenblicklichen Blickfeld eine Sichtunterstützung aus einer anderen Blickrichtung und/oder aus einer anderen Blickposition bedarf. Dieser Fall tritt auf, wenn z. B. mit der vorderen Stoßstange sehr eng an eine Bordsteinkante oder an ein anderes Hindernis rangiert werden muß und der Fahrer seine Sitzposition nicht verändern kann.

Eine weitere vorteilhafte Ausgestaltung sieht vor, dass die optische Einrichtung an der Sonnenblende angeordnet ist. Dabei kann die optische Einrichtung in der Sonnenblende als Sichtfenster angeordnet sein. Sie kann auch ausklappbar oder ausfahrbar an der Sonnenblende angeordnet sein. Mit einer solchen Anordnung wird die Funktion der oben beschriebenen Positioniereinheit von der Sonnenblende übernommen mit dem Vorteil, dass im eingefahrenen Zustand das Frontsichtsystem nicht sichtbar ist und erst bei Bedarf durch die entsprechende Positionierung der Sonnenblende und der optischen Einrichtung aktiviert wird.

Nachfolgend werden bevorzugte Ausführungsformen der Erfindung unter Bezugnahme auf die Zeichnungen erläutert. Es zeigen:
- Fig. 1: eine Seitenansicht der Blickfelder des erfindungsgemäßen Frontsichtsystems;
- Fig. 2a, 2b: eine Seitenansicht des Frontsichtsystems über dem inneren Rückspiegel;
- Fig. 3a, 3b: eine Rückansicht des Frontsichtsystems über dem inneren Rückspiegel;
- Fig. 4: die Seitenansicht des Frontsichtsystems, klappbar angeordnet an der Sonnenblende; und
- Fig. 5a, 5b: eine Ansicht des Frontsichtsystems mit einer Positioniereinheit.

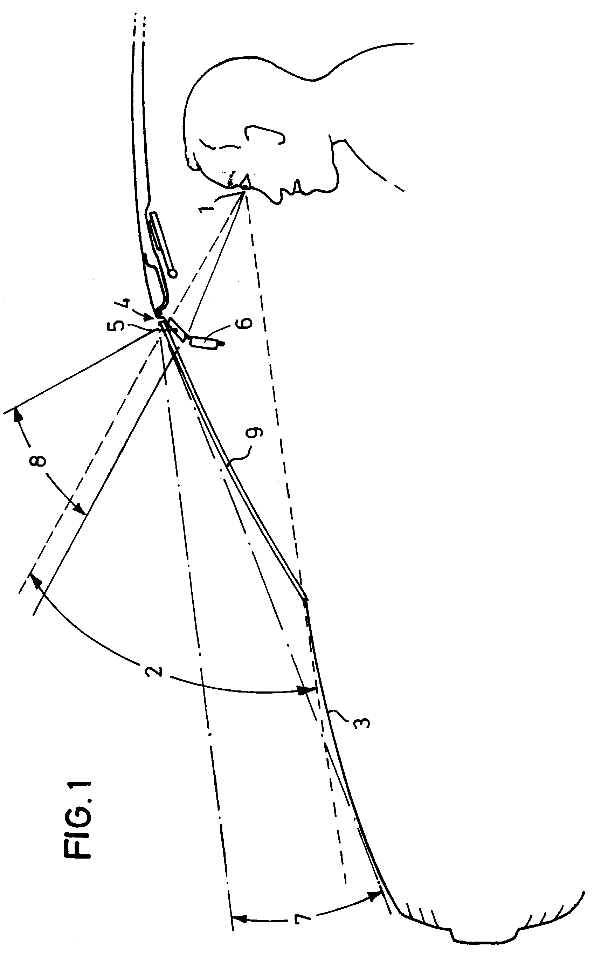

In Figur 1 sind die möglichen Blickwinkel mit dem optischen Frontsichtsystem bei einem Personenkraftwagen dargestellt. Das Blickfeld des Fahrers beginnt am Augenpunkt 1. Das Standardblickfeld 2 ist gestrichelt dargestellt, es wird unten von der Motorhaubenlinie 3 und oben vom vorderen Dachquerriegel 4 der Karosserie begrenzt. Das Frontsichtsystem 5 ist über dem inneren Rückspiegel 6 angeordnet. Je nach bedienerabhängiger Einstellung der optischen Einrichtung ergeben sich vom Augenpunkt 1 gesehen unterschiedliche Blickfelder durch das Frontsichtsystem 5. Ist die optische Einrichtung für den Blick nach unten eingestellt, ergibt sich aus der Anordnung des Frontsichtsystems 5 über dem Rückspiegel 6 das Fahrbahnblickfeld 7, begrenzt wiederum durch die Motorhaubenlinie 3. Aufgrund der relativ zum Augenpunkt 1 höheren und weiter vorne liegenden Position des Frontsichtsystems 5 kann der Fahrer durch das Frontsichtsystem 5 näherliegende Fahrbahnbereiche vor dem Fahrzeug einsehen als beim Standardblickfeld 2, und dies ohne seine Standardsitzposition zu verlassen. Ist die optische Einrichtung nach oben gerichtet, ergibt sich das Ampelblickfeld 8, begrenzt durch den vorderen Dachquerriegel 4. Hier ist der Blickwinkel durch die direkte Anordnung des Frontsichtsystems 5 hinter der Windschutzscheibe 9 steiler als beim Standardblickfeld 2 und erlaubt damit eine bequerne Beobachtung des über dem Fahrzeug befindlichen Luftraumes, wiederum ohne dass der Fahrer seine Sitzposition ändern muß.

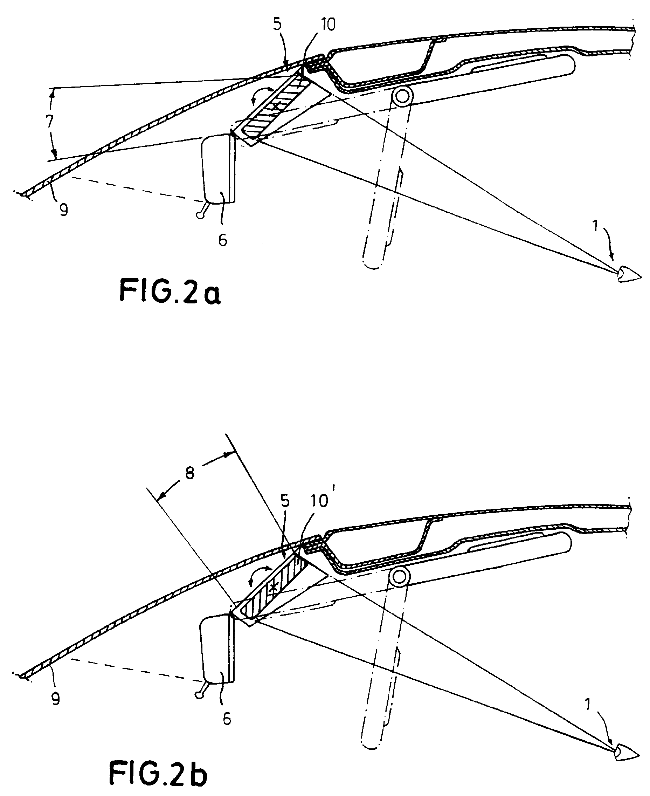

Die Seitenansicht des Frontsichtsystems in Figur 2a und 2b zeigt die bewegliche Anordnung der optischen Einheit über dem Rückspiegel 5. Die optische Einheit besteht aus Fresnellinsen 10, die in Form einer flachen Scheibe angeordnet sind. Die Fresnellinsen 10 sind schwenkbar um alle Achsen, wobei die wichtigste Schwenkbewegung die um die Querachse des Fahrzeuges ist. Eine geringfügige Schwenkbewegung dient der Anpassung des Blickwinkels an die unterschiedliche Höhe des Augenpunktes 1 bei verschiedenen Fahrern oder Sitzpositionen. Eine 180°-Schwenkung dient der Anpassung an das Fahrbahn- 7 bzw. Ampelblickfeld 8. Aufgrund der Eigenschaften der scheibenförmig angeordneten Fresnellinsen 10 wird bei einer halben Umdrehung der Fresnellinsen 10 der Blickwinkel in die entgegengesetzte Richtung abgelenkt. Dies ist dargestellt durch die beiden Positionen der Fresnellinsen 10 und 10'. In Fig. 2a sind die Linsen 10 auf das Fahrbahnblickfeld 7, in Fig. 2b sind die Linsen 10', um 180° verdreht, auf das Ampelblickfeld 8 ausgerichtet.

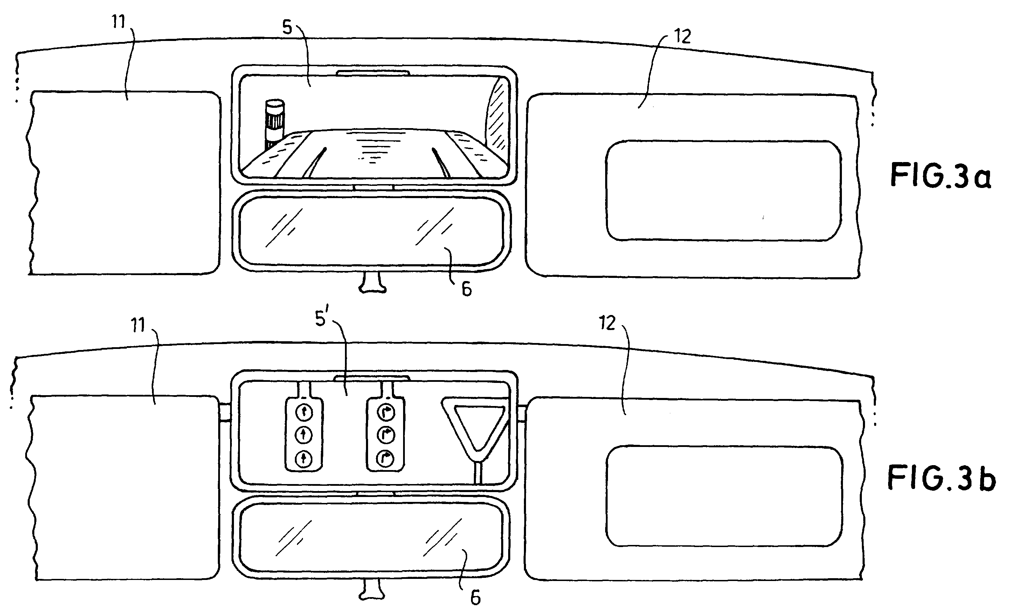

In Figur 3a und 3b ist das Frontsichtsystem 5 aus der Sicht des Fahrers dargestellt und zeigt die Anordnung des Frontsichtsystems 5 zwischen den Sonnenblenden 11 und 12 und über dem inneren Rückspiegel 6. In Figur 3a ist ein Fahrbahnblickfeld im Frontsichtsystem 5, im Figur 3b ein Ampelblickfeld im Frontsichtsystem 5' abgebildet. Neben der Erweiterung des Blickfeldes dient das Frontsichtsystem 5 auch als mittlere Sonnenblende, so dass die gesamte obere Windschutzscheibe auch mit einfach geformten Sonnenblenden 11 und 12 vollständig abzublenden ist.

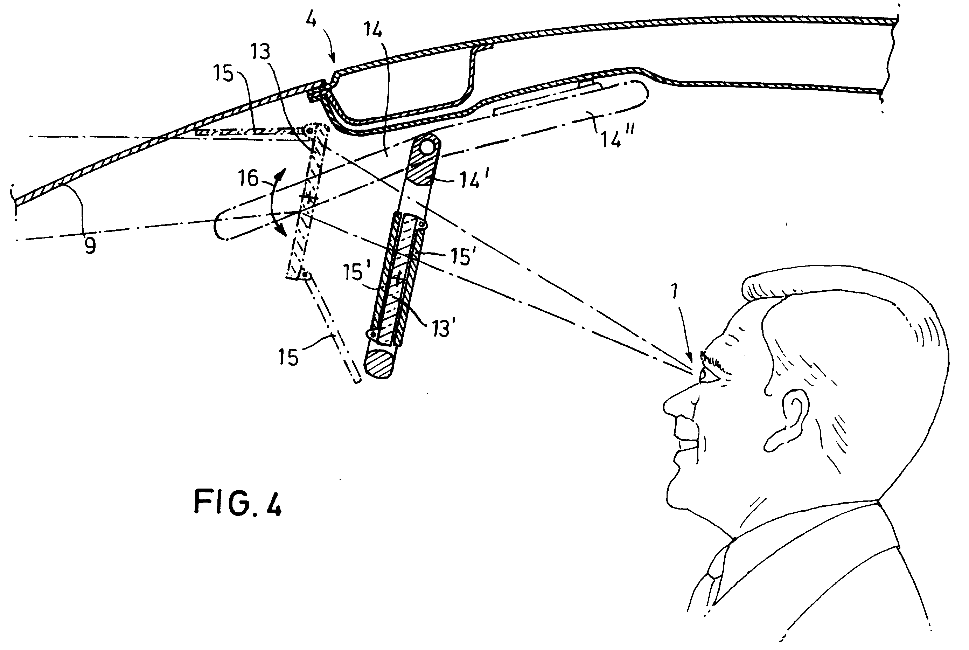

Fig. 4 zeigt ein Frontsichtsystem mit der optischen Einheit, welche wiederum aus scheibenförmig angeordneten Fresnellinsen 13 besteht, untergebracht in der Sonnenblende 14. In Ruheposition im eingefahrenen Zustand ist die Sonnenblende 14''. In verschieden ausgefahrenen Positionen befindet sich die Sonnenblende 14' und 14. In der Stellung als Sonnenblende 14' verbleiben die Linsen 13' eingeklappt in der Sonnenblende 14'. In der voll ausgeklappten Stellung der Sonnenblende 14 werden durch Aufklappen der Abdeckklappen 15 die Linsen 13 freigegeben, die entsprechend dem gewünschten Blickfeld durch Drehung in Pfeilrichtung 16 einzustellen sind.

Die Abdeckklappen 15 können jeweils einen Spiegel enthalten, der bei bestimmten optischen Linsen die notwendige Bildspiegelung bewirkt und / oder der die Funktion eines Schminkspiegels auf der Fahrerseite hat. Bei bestimmten Auslegungen der optischen Einrichtungen können die Abdeckklappen 15 als Blendschutz gegen Streulicht eingesetzt werden. Wenn die Linsen zur Anpassung an das Fahrbahn- bzw. Ampelblickfeld in Pfeilrichtung 16 um 180° gedreht werden, übernimmt jeweils eine Klappe 15 die Aufgabe der anderen Klappe 15, die letztere vor der Drehung hatte.

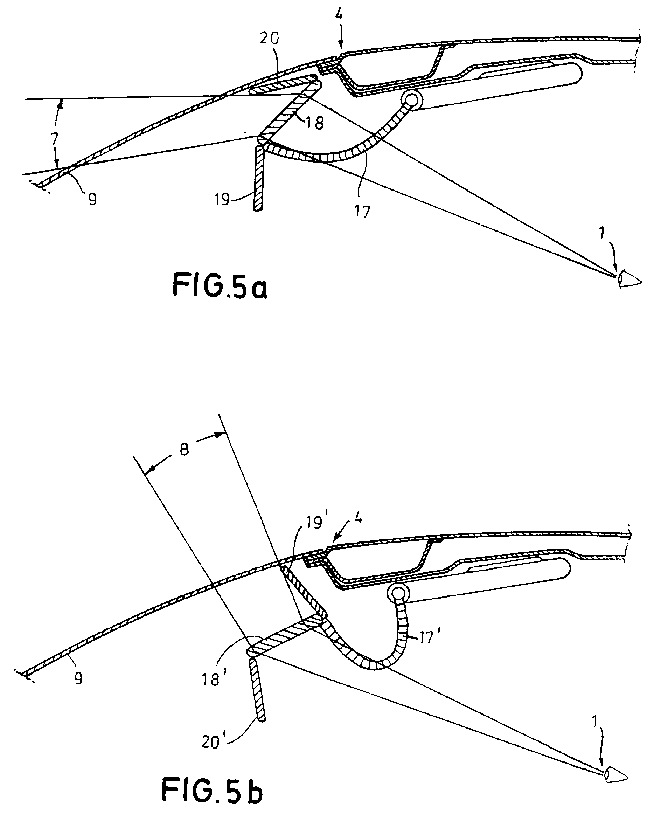

In Fig. 5a ist die Anordnung des Frontsichtsystems auf einer beweglichen Positioniereinheit 17 mit der Ausrichtung auf das Fahrbahnblickfeld 7 gezeigt. Das Frontsichtsystem besteht wieder aus einer scheibenförmigen optischen Linse 18 und zwei Abdeckklappen 19 und 20. Durch die bewegliche Anordnung kann das Frontsichtsystem an beliebiger Stelle im Fahrerraum des Fahrzeuges positioniert werden. Die beiden Abdeckklappen sind an gegenüberliegenden Rändern der Linse 18 angeordnet, so dass bei der Ausrichtung auf das Ampelblick 8, s. Fig. 5b, nach einer 180°-Drehung der Linsen 18' die Funktion der Klappe 19 durch die Klappe 20' und die Funktion der Klappe 20 durch die Klappe 19' übernommen wird.

## Patentansprüche

1. Optisches Frontsichtsystem, insbesondere für Kraftfahrzeuge,
**dadurch gekennzeichnet**, dass im vorderen Blickfeld des Fahrers eine optische Einrichtung angeordnet ist, die ein Bild des davorliegenden Frontbereiches des Fahrzeuges zeigt.

2. Optisches Frontsichtsystem nach Anspruch 1,
**dadurch gekennzeichnet**, dass die optische Einrichtung beweglich gelagert ist, um in die gewünschte Blickrichtung des Fahrers ausgerichtet werden zu können.

3. Optisches Frontsichtsystem nach Anspruch 1,
**dadurch gekennzeichnet**, dass die optische Einrichtung über dem inneren Rückspiegel angeordnet ist.

4. Optisches Frontsichtsystem nach Anspruch 1,
**dadurch gekennzeichnet**, dass die optische Einrichtung auf einer Positioniereinheit angeordnet ist.

5. Optisches Frontsichtsystem nach Anspruch 1,
**dadurch gekennzeichnet**, dass die optische Einrichtung an der Sonnenblende angeordnet ist.

6. Optisches Frontsichtsystem nach Anspruch 5,
**dadurch gekennzeichnet**, dass die optische Einrichtung in der Sonnenblende als Sichtfenster angeordnet ist.

7. Optisches Frontsichtsystem nach Anspruch 5,
**dadurch gekennzeichnet**, dass die optische Einrichtung ausklappbar an der Sonnenblende angeordnet ist.

8. Optisches Frontsichtsystem nach Anspruch 5,
**dadurch gekennzeichnet**, dass die optische Einrichtung ausfahrbar an der Sonnenblende angeordnet ist.
